# EUROPEAN PATENT SPECIFICATION

(11) **EP 2 800 320 B1**
(45) Date of publication and mention of the grant of the patent: **05.12.2018**
(21) Application number: 14166754.3
(22) Date of filing: 30.04.2014
(51) Int. Cl.: H04L 12/701, H04L 29/06, H04L 29/08

(54) **PROCESSING DATA**
DATENVERARBEITUNG
TRAITEMENT DE DONNÉES

(30) Priority: 30.04.2013 GB 201307811; 03.05.2013 GB 201308080; 03.05.2013 GB 201308078; 17.01.2014 GB 201400841; 28.01.2014 US 201414166819
(43) Date of publication of application: 05.11.2014
(73) Proprietor: Metaswitch Networks Ltd, Enfield, Middlesex EN2 6BQ (GB)
(72) Inventor: Evans, Michael, Enfield, Middlesex EN2 6BQ (GB)
(74) Representative: EIP

(56) References cited:
- WO-A1-2012/149966
- US-A1- 2006 149 812
- US-A1- 2009 319 641
- "3rd Generation Partnership Project; Technical Specification Group Services and System Aspects; IP Multimedia Subsystem (IMS); Stage 2 (Release 5)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.2.0, 1 October 2001 (2001-10-01), pages 1-123, XP050363261,

## Description

### Technical Field

The present invention relates to processing data. In particular, but not exclusively, the present invention relates to processing data in a telecommunication network.

### Background

Internet Protocol (IP) telephony networks, such as those conforming to the IP Multimedia Subsystem (IMS) are currently experiencing an increase in prevalence. In such networks, telephony services are typically provided according to the Session Initiation Protocol (SIP). An IP telephony network may contain a number of network nodes, such as Call Session Control Function (CSCF) entities in the case of IMS, which are responsible for conducting registration procedures, handling routing requests and/or handling service requests in the network. In the context of SIP, such a network node may fulfil the roles of a SIP server and/or SIP proxy. Network nodes must therefore maintain state information (for example routing data, authentication data etc.) for each subscriber that they serve. For relatively small numbers of subscribers, it may be possible for each network node to maintain state information for every subscriber. However, for large numbers of subscribers, the memory requirements for storing state information for every subscriber at each network node and the requirement for replicating the state information between all network nodes in the network can become prohibitive.

In order to cater for larger numbers of subscribers, sharding techniques are known to be employed in IMS networks. Sharding involves allocating a longstanding responsibility for a subset of the subscribers in the telecommunications network to each network node in the network. Each network node therefore need only maintain state information for its allocated subset of subscribers. In a typical example, when a subscriber device registers with the network, it may be allocated to a network node, such as a Serving CSCF (S-CSCF) in the case of IMS, which is thereafter responsible for maintaining the appropriate state information for that subscriber until such time as the device unregisters from the network. However, this approach suffers from increased routing complexity because any messages (for example, requests) relating to a given subscriber that are handled after the initial registration must be routed via the appropriate, sharded network node. Further, the complexity of providing redundancy between sharded network nodes in order to handle failure of an individual network node in the network is increased.

International patent application no. WO 2012/149966 A1 describes a method and network entities for enabling server allocation in an IMS-based Multimedia over IP network. The method includes receiving by a S-CSCF server of the network subscriber registration data, transmitting, by the S-CSCF server, information representative of subscriber data to a P-CSCF server and/or to an HSS for storing the information representative of the subscriber data in a memory by the P-CSCF server and/or by the HSS, and transmitting, by the S-CSCF server, a S-CSCF group address to the P-CSCF server and/or to the HSS, respectively, the S-CSCF group address being representative of a group of S-CSCF servers, the S-CSCF server being included in the group of S-CSCF servers.

United States patent application no. US-A-2006/149812 describes a system and method for accelerating call setup by caching, where a user equipment accesses an IMS network via a radio access network and a GPRS core network. The GPRS core network has a HSS recorded with data associated with the user equipment. The IMS network comprises at least one S-CSCF and at least one I-CSCF. The I-CSCF has a cache device. The user equipment sends a register signal which is forwarded to the I-CSCF, and the I-CSCF queries the HSS about the services that the user equipment has applied, so as to select an S-CSCF. The I-CSCF then forwards the register signal to the selected S-CSCF, and the S-CSCF registers to the HSS as being mapped to the user equipment. When the I-CSCF receives an OK signal, the mapping between the user equipment and the S-CSCF is recorded in the cache device.

Hence, it would be desirable to provide improved and/or alternative techniques for handling potentially large numbers of subscribers and/or providing the required network scalability to do so.

### Summary

According to a first aspect of the present invention, there is provided a method of processing data in a telecommunications network according to claim 1.

According to a second aspect of the present invention, there is provided apparatus for processing data in a telecommunications network according to claim 23.

According to a third aspect of the present invention, there is provided a computer program product (for example computer software) according to claim 24.

According to a fourth aspect of the present invention, there is provided a system for processing data in a telecommunications network according to claim 25.

Embodiments comprise a computer program product comprising a non-transitory computer-readable storage medium having computer readable instructions stored thereon, the computer readable instructions being executable by a computerised device to cause the computerised device to perform the method of the first aspect of the present invention.

Further features and advantages of the invention will become apparent from the following description of preferred embodiments of the invention, given by way of example only, which is made with reference to the accompanying drawings.

### Brief Description of the Drawings

Figure 1 shows an example telecommunications network in which embodiments of the present disclosure may be practiced;
Figure 2 shows an example registration procedure according to embodiments;
Figure 3 shows an example communication setup request procedure according to embodiments
Figure 4 shows an example telecommunications network in which embodiments of the present disclosure may be practiced;
Figure 5 shows an example subscriber configuration data retrieval procedure according to embodiments;
Figure 6 shows an example subscriber configuration data retrieval procedure according to embodiments;
Figure 7 shows an example subscriber configuration data retrieval procedure according to embodiments; and
Figure 8 shows an example telecommunications network in which embodiments of the present disclosure may be practiced.

### Detailed Description

In order to provide efficient scalability of a telephony network, embodiments do not employ a longstanding assignment of a given subscriber to a given network node. Instead, any network node among a plurality of network nodes is enabled to process messages relating to any given subscriber.

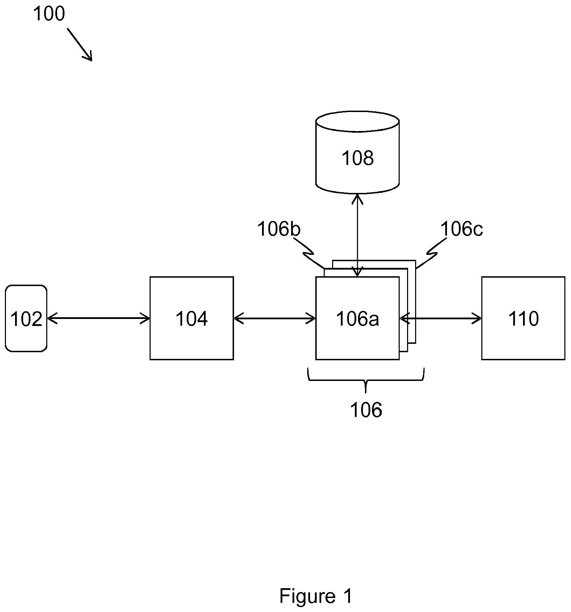

Figure 1 illustrates an example telecommunications network 100 in which embodiments of the present disclosure may be practiced. Telecommunications network 100 comprises a plurality of network nodes 106, which are collectively responsible for conducting registration procedures for subscriber devices and/or processing routing data relating to communication sessions conducted in telecommunications network 100. In this manner, the plurality of network nodes 106 may be referred to as a cluster of network nodes. The cluster of network nodes 106 may comprise nodes performing the functions of one or more CSCFs, SIP Routers, SIP Registrars, SIP Service Nodes, SIP Proxies etc. In Figure 1, the plurality of network nodes 106 is depicted as comprising three network nodes 106a, 106b and 106c. In practice, the plurality of network nodes 106 may comprise further network nodes (not shown), or fewer than the three depicted network nodes.

Subscriber device 102 is configured to conduct telephony sessions via telecommunications network 100. Subscriber device 102 communicates with telecommunications network 100 via edge proxy node 104. The communication link between subscriber device 102 and edge proxy node 104 may further comprise one or more intermediate entities, such as wireless access points, routing devices etc. Edge proxy node 104 may be further responsible for interfacing between telecommunications network 100 and one or more further subscriber devices (not shown). Telecommunications network 100 may also comprise one or more further edge proxy nodes (not shown), each responsible for interfacing between telecommunications network 100 and a number of yet further subscriber devices (not shown). For example, each further edge proxy node may provide access to telecommunications network 100 for subscriber devices in different geographic locations.

The network nodes in the plurality of network nodes in cluster 106 are each configured to access shared registration data store 108 for reading and writing registration data relating to subscribers in telecommunications network 100. Shared registration data store 108 comprises registration data for a plurality of subscriber devices registered with telecommunications network 100, including subscriber device 102, and is accessible by each of the plurality of network nodes in cluster 106. Network nodes 106 are also configured to communicate with entities outside of telecommunications network 100 (i.e. entities in different telecommunications networks; not shown) via border entity 110. In the context of IMS, border entity 110 may, for example, comprise one or more of a Media Gateway Control Function (MGCF) or Interconnection Border Control Function (IBCF).

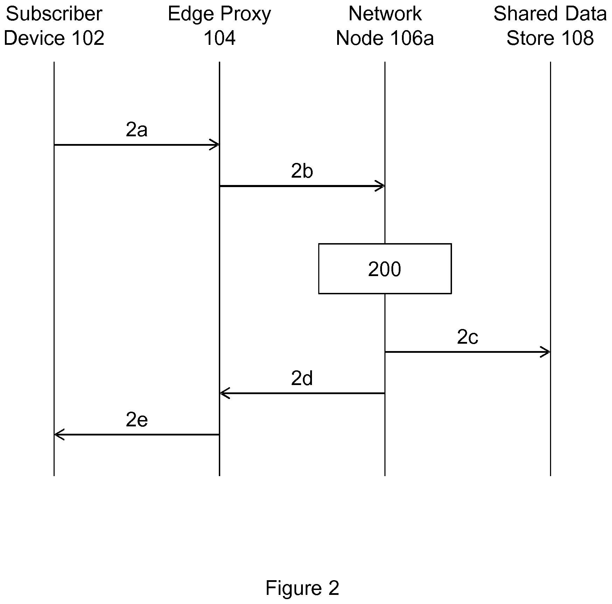

Figure 2 illustrates an example registration procedure according to embodiments. A registration request message 2a is initially sent from subscriber device 102 to edge proxy node 104. In embodiments, registration request message 2a comprises registration data for subscriber device 102. In the case of SIP, registration request message 2a may, for example, comprise a SIP REGISTER request. Transmission of the registration request message may be preceded by establishment (not shown) of a communication channel, for example via the Transmission Control Protocol (TCP), the User Datagram Protocol (UDP) or Websocket, between subscriber device 102 and edge proxy 104.

In response to receiving registration request message 2a, edge proxy 104 allocates the registration request to one of the plurality of network nodes 106, in this case network node 106a. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria allow the registration request message to be handled by any of the plurality of network nodes in the cluster 106. The registration request message is then forwarded to the allocated network node 106a as registration request message 2b. Edge proxy 104 may modify the registration request message prior to forwarding it by adding identification information for edge proxy 104 to registration request message 2b. Upon receipt of registration request message 2b, network node 106a may perform an optional authentication procedure as shown by step 200. Such an authentication procedure may comprise contacting a subscriber configuration network node responsible for authenticating subscriber devices in telecommunications network 100. In the case of IMS, the subscriber configuration network node may, for example, comprise a Home Subscriber Server (HSS).

Having authenticated (if appropriate) the subscriber device 102, network node 106a writes the registration data from the received registration request message 2b into shared registration data store 108 at step 2c. In alternative embodiments, prior to writing the registration data into shared registration data store 108, network node 106a may first retrieve registration data for the given subscriber from the shared data store, update the retrieved registration data with the received registration data for that subscriber, and then write the updated registration data back to the shared data store.

Having written the subscriber data to the shared data store, registration confirmation (or 'registration response') message 2d is transmitted from network node 106a to edge proxy 104 (which may be identified by the added identification information in registration request message 2b). The registration confirmation message is then forwarded by edge proxy 104 to subscriber device 102 as registration confirmation message 2e, thereby completing the registration procedure.

In embodiments, the registration procedure is used to establish a relationship (or "binding") between a subscriber identifier and a network address for subscriber device 102. In embodiments, the subscriber identifier comprises a SIP address. In embodiments, the network address comprises one or more of an Internet Protocol (IP) address and a port associated with the subscriber device. Routing path information may also be registered during a registration procedure if required to successfully reach subscriber device 102 (for example to traverse any intermediate network address translation (NAT) entities). The registration data comprised in registration request message 2a may, for example, comprise one or more of the subscriber identifier, the network address for subscriber device 102 and path information.

In embodiments, the subscriber device may be required to perform a periodic re-registration procedure in order to maintain its registration. In some such embodiments, the stored registration data may expire after a predetermined period of time (for example after a previous registration procedure). The re-registration procedure may, for example, comprise the same steps as the aforementioned registration procedure. In embodiments, the optional authentication procedure is performed during the initial registration procedure, but omitted in each subsequent re-registration procedure. In alternative embodiments, the authentication procedure is performed during both the initial registration and one or more subsequent re-registration procedures. In embodiments, since the registration information for subscriber device is stored in shared data store 108, subsequent re-registration requests relating to subscriber device 102 may be handled by any network node in the cluster of network nodes 106. In arrangements where the registration request message 2b is handled by network node 106a, a subsequent re-registration request is handled by a different network node in the cluster 106 (for example, network node 106b).

In some embodiments, multiple subscriber devices may be registered against the same subscriber identifier simultaneously. In some such embodiments, shared registration data store 108 comprises registration and/or binding information for each registered subscriber device. In some embodiments, two or more of the multiple registered subscriber devices correspond to two or more clients located on the same client device; in such embodiments, the two or more clients located on the same client device may be referred to as collocated.

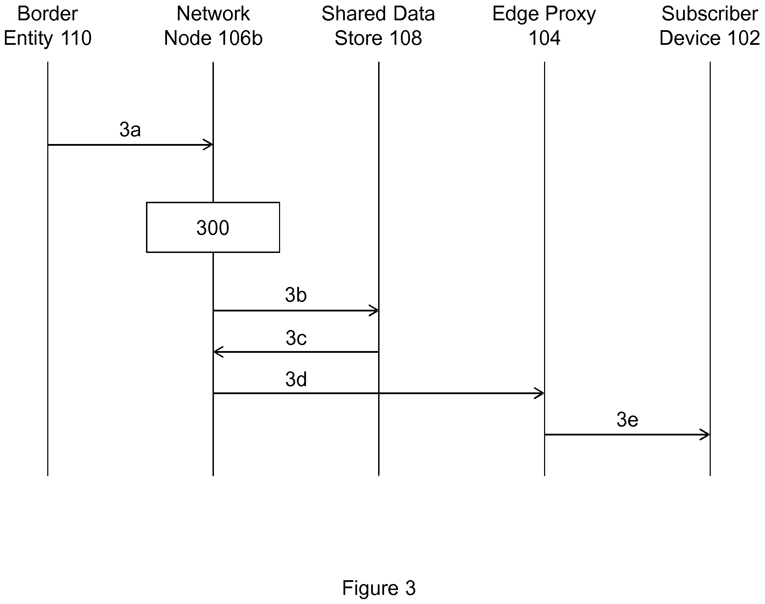

Figure 3 illustrates an example communication setup request procedure according to embodiments. In the example depicted in Figure 3, a communication session setup request message (hereinafter a dialog request message) relating to subscriber device 102 is received from outside of telecommunications network 100 at border entity 110. In the case of SIP, the dialog request message may comprise a SIP INVITE message, used in establishing a communication session between two subscriber devices. In further embodiments, the dialog request message may comprise a SIP MESSAGE message, a SIP SUBSCRIBE message or a SIP PUBLISH message. Border entity 110 allocates the dialog request message request to one of the plurality of network nodes 106, in this case network node 106b. In some embodiments, the choice of network node is made randomly by border entity 110. In further embodiments, the choice of network node is made according to one or more load balancing criteria in order to distribute network load across the plurality of network nodes in cluster 106. In embodiments, the one or more load balancing criteria allow the dialog request message to be handled by any of the plurality of network nodes in the cluster 106. As a result, the dialog request message is forwarded to the allocated network node 106b as dialog request message 3a. In alternative embodiments (not shown), the incoming dialog request message originates from a further subscriber device within telecommunications network 100, in which case, the dialog request message is allocated and forwarded to a network node in the cluster of network nodes 106 by whichever edge proxy the further subscriber device is in communication with.

Having received dialog request message 3a, network node 106b inspects the received dialog request to determine which subscriber device the dialog request relates to (in this case subscriber device 102). Network node 106b may optionally determine one or more filter criteria to apply to the dialog request (for example, to determine whether application servers should be invoked), as shown by step 300. Determination of any such filter criteria may comprise contacting a subscriber configuration network node responsible for storing subscriber configuration data in telecommunications network 100. In the case of IMS, the subscriber configuration network node may, for example, comprise an HSS.

Having optionally determined and/or applied any necessary filter criteria, the routing proxy queries shared registration data store 108 for registration data for subscriber device 102 via request message 3b. As a result of a previous registration procedure (for example, as described in relation to Figure 2), shared registration data store 108 comprises registration data for subscriber device 102, and returns this to network node 106b in response message 3c. Having retrieved the registration data for subscriber device 102 from the shared registration data store, network node 106b can continue to process the dialog request by routing the dialog request message, on the basis of the retrieved registration data for subscriber device 102, to the appropriate edge proxy 104 as dialog request message 3d. Edge proxy 104 then forwards the dialog request message to subscriber device 102 as dialog request message 3e. In some embodiments, in response to routing the dialog request message to the appropriate edge proxy 104, network node 106b also updates (not shown) the registration data for subscriber device 102 in shared registration data store 108.

Hence, it can be seen that by utilising shared registration data store 108, the requirement for a longstanding association between subscriber device 102 and a given network node in the cluster of network nodes 106 is removed, and request messages may be routed to/from subscriber device 102 by any available network node in the cluster 106.

In embodiments, the retrieved registration data listing the appropriate edge proxy 104 may be out of date (for example, if the subscriber device has since disconnected form the network). In such embodiments, the edge proxy 104 may respond to dialog request message 3d by sending a request rejection message (not shown) back to network node 106b indicating that the registration information is out of date. In some such embodiments, in response to receipt of the request rejection message, network node 106b updates the registration data for subscriber device 102 in shared registration data store 108.

In embodiments, shared registration data store 108 further comprises registration data for one or more further subscriber devices associated with the subscriber of subscriber device 102. In such embodiments, registration data for each further subscriber device associated with the subscriber of subscriber device 102 is returned to network node 106b in the response message from shared data store 108. Dialog request messages may then be forwarded to each of these further subscriber devices in addition to subscriber device 102 (via the appropriate edge proxies).

In some arrangements, shared registration data store 108 comprises a clustered registration data store, wherein the data store is distributed among a number of nodes in telecommunications network 100. In embodiments, the registration data stored in shared registration data store 108 is distributed among the cluster of network nodes 106. In such embodiments, a portion of the registration data stored in shared registration data store 108 is stored in memory at two or more or each network node in the cluster of network nodes 106. In embodiments, a first portion of the registration data is stored in memory at network node 106a, and a second, different portion of the registration data is stored in memory at network node 106b.

Hence, during processing at a given network node in the cluster of network nodes 106, any registration data that may be required can be stored either locally at the given network node or remotely on a different network node in the cluster 106. Hence the aforementioned write, request and/or response messages sent to and received from shared registration data store 108 may be sent and received within the given network node, or transmitted externally from the given network node to another node in the cluster, depending on the location of the required registration data. In embodiments, the shared registration data store comprises a distributed memory system such as Memcached™, Infinispan™ or Cloudbase™.

As described in relation to Figures 2 and 3 above, the data processing responsibilities of the cluster of network nodes 106 may comprise contacting a subscriber configuration network node, such as an HSS in the case of IMS. In a conventional telecommunications network, where a longstanding relationship is set up between a given subscriber device and a given network node during a registration procedure, subscriber configuration data retrieved from such a subscriber configuration network node may be stored locally by the given network node in order to prevent successive calls to the subscriber configuration network node if subscriber configuration data for the given subscriber device is required again subsequently. However, as there is no such longstanding relationship in the new architectural arrangement of the present disclosure, storing of data retrieved from the subscriber configuration network node by a network node in the cluster 106 may be inefficient, as the next time the data will likely be required by a different network node. Hence, the new architectural arrangement of the present disclosure may lead to an increase in the frequency of queries to subscriber configuration network nodes. Such an increase in queries to a subscriber configuration network node may negatively impact the performance of the subscriber configuration network node, for example by overloading access resources to/from and/or processing capabilities of the subscriber configuration network node. The new architectural arrangement of the present disclosure may be additionally or alternatively facilitated through the use of a cache comprising a shared cache store for caching subscriber configuration data for subscriber devices.

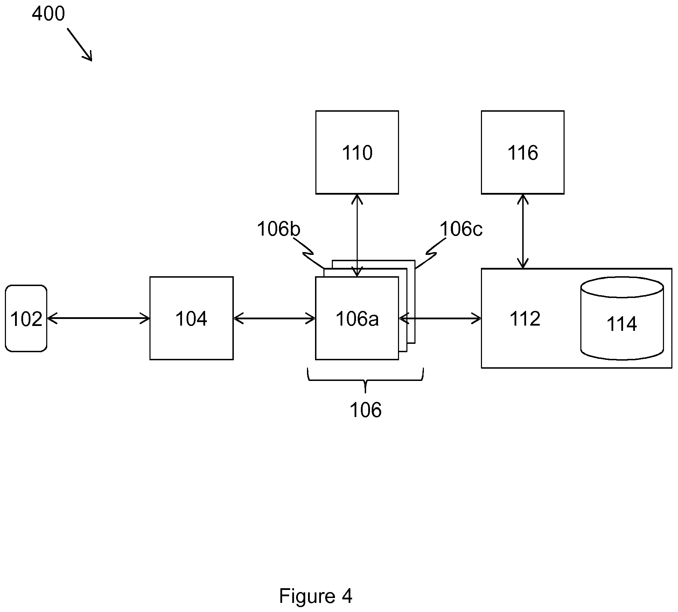

Figure 4 illustrates an example telecommunications network 400 in which embodiments of the present disclosure may be practiced. Telecommunications network 400 comprises subscriber device 102, edge proxy node 104, a cluster of network nodes 106 (comprising network nodes 106a, 106b and 106c) and border entity 110, whose function is analogous to the corresponding entities as previously described in relation to Figure 1. In telecommunications network 400, the plurality of network nodes in cluster 106 are also configured to communicate with cache 112, which comprises a shared cache store 114 for caching subscriber configuration data for subscriber devices in telecommunications network 400. Cache 112 is configured to communicate with subscriber configuration network node 116, which is responsible for storing subscriber configuration data for subscriber devices in telecommunications network 400 (including subscriber device 102). In the case of IMS, subscriber configuration network node 116 may comprise an HSS. In embodiments, the interface between cache 112 and the HSS comprises a Cx interface, as defined in the IMS specifications.

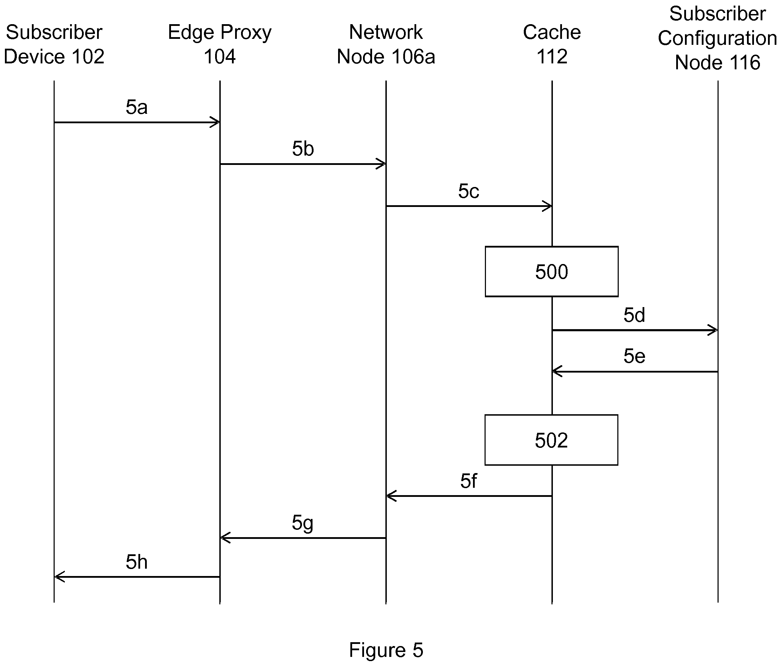

Figure 5 illustrates an example subscriber configuration data retrieval procedure according to embodiments. In the embodiment shown in Figure 5, a subscriber configuration data retrieval procedure is carried out as part of a registration procedure relating to subscriber device 102, such as the one described previously in relation to Figure 2. A registration request message 5a is initially sent from subscriber device 102 to edge proxy node 104. In embodiments, registration request message 5a comprises registration data for subscriber device 102. In the case of SIP, registration request message 5a may for example comprise a SIP REGISTER request. Transmission of the registration request message may be preceded by establishment of a communication channel, for example via the Transmission Control Protocol (TCP), the User Datagram Protocol (UDP) or Websocket, between subscriber device 102 and edge proxy 104 (not shown).

In response to receiving registration request message 5a, edge proxy 104 allocates the registration request to one of the plurality of network nodes 106, in this case network node 106a. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria enable handling of the registration request message by any of the plurality of network nodes in the cluster 106. The registration request message is then forwarded to the allocated network node 106a as registration request message 5b. In embodiments, edge proxy 104 maintains a pool of TCP connections each corresponding to one of the plurality of network nodes in cluster 106, where registration request message 5b is transmitted via the TCP connection corresponding to the allocated network node 106a. In embodiments, edge proxy 104 modifies the registration request message 5b prior to forwarding it by adding identification information for edge proxy 104. Upon receipt of registration request message 5b, network node 106a is configured to perform an authentication procedure, which may, for example, comprise issuing one or more authentication challenge messages to subscriber device 102 and receiving one or more authentication responses from subscriber device 102 (not shown), depending on the authentication scheme chosen. In some embodiments, the authentication procedure comprises a SIP digest authentication. In further embodiments, the authentication comprises IMS Authentication and Key Agreement (AKA) authentication. In order to complete the authentication procedure, network node 106a requires subscriber configuration data for subscriber device 102. Network node 106a transmits a subscriber configuration data request 5c to cache 112 in relation to subscriber device 102, on the basis of information received in registration request message 5b.

In response to receipt of subscriber configuration data request 5c, cache 112 determines whether the shared cache store contains subscriber configuration data for subscriber device 102 at step 500. In the embodiments depicted in Figure 5, cache 112 determines that shared cache store 114 does not contain subscriber configuration data for subscriber device 102. In response to determining that shared cache store 114 does not contain subscriber configuration data for subscriber device 102 at step 500, cache 112 retrieves subscriber configuration data for subscriber device 102 from subscriber configuration network node 116. Cache 112 transmits subscriber configuration data request 5d to subscriber configuration network node 116 in relation to subscriber device 102 and receives corresponding subscriber configuration data response 5e which comprises subscriber configuration data for subscriber device 102. In embodiments, subscriber configuration data request 5d and corresponding subscriber configuration data response 5e comprise a Multimedia-Auth-Request and a Multimedia-Auth-Answer respectively (as defined in the IMS specifications). In response to receipt of subscriber configuration data response 5e, cache 112 responds to subscriber configuration data request 5c by transmitting subscriber configuration data retrieval response 5f, which comprises the subscriber configuration data for subscriber device 102, to network node 106a.

In embodiments, the subscriber configuration data for subscriber device 102 comprises authentication data for subscriber device 102. Having received the authentication data for subscriber device 102, network node 106a can complete the authentication procedure with subscriber device 102 as described above. Having completed the authentication procedure for subscriber device 102, the registration procedure may be continued by network node 106a, for example by updating registration information for subscriber device 102 on the basis of the contents of received registration request message 5b (as described previously in relation to Figure 2). Once network node 106 has finished processing the registration request, registration confirmation message 5g is transmitted from network node 106a to edge proxy 104 (which may be identified by the added identification information in registration request message 5b). The registration confirmation message 5g is then forwarded by edge proxy 104 to subscriber device 102 as registration confirmation message 5h, thereby completing the registration procedure.

Hence, subscriber configuration network node 116 need only be contacted if the required subscriber configuration data is not contained in shared cache store 114. In some embodiments, prior to transmitting subscriber configuration data retrieval response 5f, cache 112 writes the subscriber configuration data for subscriber device 102 received in subscriber configuration data retrieval response 5e into shared cache store 114, as shown by step 502. Hence, a subsequent request for subscriber configuration data for subscriber device 102 may be fulfilled without having to re-query subscriber configuration network node 116. In this manner, the number of queries to subscriber configuration network node 116 is reduced, thereby alleviating any negative impact on the performance of subscriber configuration network node 116 which may for example result from overloading of access resources to/from and/or processing capabilities of the subscriber configuration network node 116.

Whilst in the embodiments described in relation to Figure 5, the required subscriber configuration data for subscriber device 102 was not contained in shared cache store 114, in alternative embodiments, the required subscriber configuration data for subscriber device 102 is contained in shared cache store 114, for example as a result of a previous caching procedure. In such cases, the required subscriber configuration data for subscriber device 102 is retrieved from shared cache store 114 instead, and may therefore be transmitted to network node 106a without the need to query subscriber configuration network node 116 again.

In embodiments, subscriber device 102 may be required to perform a periodic re-registration procedure in order to maintain its registration. In some such embodiments, the authentication procedure is not performed during re-registration procedure following an initial registration procedure in which the authentication procedure was successfully completed. In alternative embodiments, the authentication procedure is performed during both the initial registration and subsequent re-registration procedures.

In some embodiments, such as when the interface between cache 112 and subscriber configuration network node 116 is a Cx interface according to the IMS specifications, the interface between cache 112 and subscriber configuration network node 116 facilitates a registration in relation to the requested subscriber registration data. In such embodiments, after subscriber data for subscriber device 102 is retrieved from subscriber configuration network node 116 by cache 112, any updates made to the subscriber configuration data stored in subscriber configuration network node 116 are notified to cache 112 through the transmission of a notification from subscriber configuration network node 116 to cache 112. In embodiments, the notification comprises the updated subscriber configuration data for subscriber 102. In alternative embodiments, cache 112 retrieves the updated subscriber configuration data for subscriber 102 from subscriber configuration network node 116 in response to receipt of the notification. In embodiments the updated subscriber configuration data comprises one or more of subscriber profile information and one or more initial filter criteria. In embodiments, in response to receipt of the updated subscriber configuration data for subscriber 102, cache 112 stores the updated subscriber configuration data for subscriber 102 in shared cache store 114. Hence, subsequent requests for subscriber configuration data for subscriber 102 received at cache 112 return the updated subscriber configuration data for subscriber 102. In some embodiments, there is a limited period of time in which subscriber configuration network node 116 will notify cache 112 of changes made to the subscriber configuration data stored at subscriber configuration network node 116 in relation to subscriber device 102 following the retrieval of the subscriber configuration data. In embodiments, the expiry time of this time period is stored alongside the corresponding subscriber configuration data in shared cache store 114. According to embodiments, after the expiration of this registration, the corresponding subscriber configuration data in the shared cache store 114 is also expired, such that any subsequent request for that subscriber configuration data results in a new query being sent from cache 112 to subscriber configuration network node 116, and does not return the potentially outdated (i.e. expired) subscriber configuration data from shared cache store 114.

In embodiments, the subscriber configuration data retrieved from subscriber configuration network node 116 and/or stored in shared cache store 114 comprises one or more initial filter criteria (IFC). An initial filter criteria represents a subscription of a subscriber to a given application, and may, for example, define a specific application server that should be invoked in relation to communication sessions with the given subscriber device. In embodiments, the subscriber configuration data retrieved from subscriber configuration network node 116 and/or stored in shared cache store 114 comprises subscriber profile information. Subscriber profile information may for example include user related data, group lists, user service related information, user location information and/or charging information.

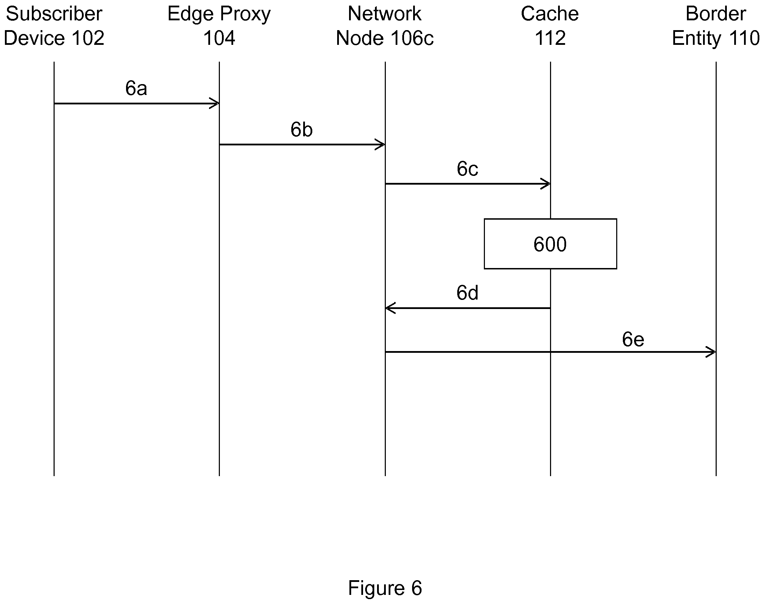

Figure 6 illustrates an example subscriber configuration data retrieval procedure according to embodiments. In the embodiment shown in Figure 6, the subscriber configuration data retrieval procedure is carried out as part of a communication session setup procedure between subscriber device 102 and a remote subscriber device (not shown) within or outside telecommunications network 400. A communication session setup request message 6a (hereinafter a dialog request message) is transmitted from subscriber device 102 to edge proxy 104. In the case of SIP, the dialog request message may comprise a SIP INVITE message, used in establishing a communication session between two (or more) subscriber devices. Edge proxy 104 allocates the dialog request to one of the plurality of network nodes 106, in this case network node 106c. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria enable handling of the dialog request message by any of the plurality of network nodes in the cluster 106. As a result, the dialog request message is forwarded to the allocated network node 106c as dialog request message 6b.

Having received dialog request message 6b, network node 106b inspects the received dialog request to determine which subscriber the dialog request relates to (in this case the subscriber of subscriber device 102). Network node 106c then performs a filtering procedure to determine and/or apply one or more initial filter criteria to the dialog request. In order to complete the filtering procedure, network node 106c requires subscriber configuration data for subscriber device 102. Network node 106c transmits a subscriber configuration data retrieval request 6c to cache 112 in relation to subscriber device 102, on the basis of information received in dialog request message 6b.

In response to receipt of subscriber configuration data retrieval request 6c, the cache determines whether the shared cache store contains subscriber configuration data for subscriber device 102 at step 600. In the embodiments depicted in Figure 6, cache 112 determines that shared cache store 114 does contain subscriber configuration data for subscriber device 102, for example as a result of a recent/previous registration procedure carried out in relation to subscriber device 102. In embodiments, the previous registration processing was performed by a network node in cluster 106 other than network node 106c. In response to determining that shared cache store 114 does contain subscriber configuration data for subscriber device 102 at step 600, cache 112 retrieves subscriber configuration data for subscriber device 102 from shared cache store 114 and transmits the retrieved subscriber configuration data to network node 106c in subscriber configuration data retrieval response 6d.

In embodiments, the retrieved subscriber configuration data for subscriber device 102 comprises initial filter criteria for subscriber device 102. Having received the initial filter criteria for subscriber device 102, network node 106c can complete the filtering procedure for the dialog request by applying any necessary filters and/or invoking any required application servers etc. as described above. Having completed the filtering procedure for subscriber device 102, processing of the communication session setup can be continued by network node 106c, for example through transmission of dialog request message 6e from network node 106c to border entity 110 (which may then forward the dialog request message to one or more further entities within or outside of telecommunications network 400, including the remote subscriber device).

Hence, as the required subscriber configuration data for subscriber device 102 is contained in shared cache store 114, a further query to subscriber configuration network node 116 is avoided. Whilst in the embodiments described in relation to Figure 6, the required subscriber configuration data for subscriber device 102 was contained in shared cache store 114, in alternative embodiments, the required subscriber configuration data for subscriber device 102 is not contained in shared cache store 114, in which case it is retrieved from subscriber configuration network node 116 as described previously in relation to Figure 5. In some embodiments, the required subscriber configuration data for a communication session setup procedure is retrieved by cache 112 from subscriber configuration network node 116 via a Server-Assignment-Request message and a Server-Assignment-Answer message (as defined in the IMS specifications) transmitted to and received from subscriber configuration network node 116 respectively. In further embodiments, the required subscriber configuration data for subscriber device 102 contained within shared cache store 114 may have expired (i.e. an expiry time associated with the subscriber configuration data has expired), in which case it is retrieved from subscriber configuration network node 116 as described above. In embodiments, in response to retrieving the subscriber configuration data for subscriber device 102 from subscriber configuration network node 116, the associated expiry time for newly retrieved subscriber configuration data for subscriber device 102 is reset.

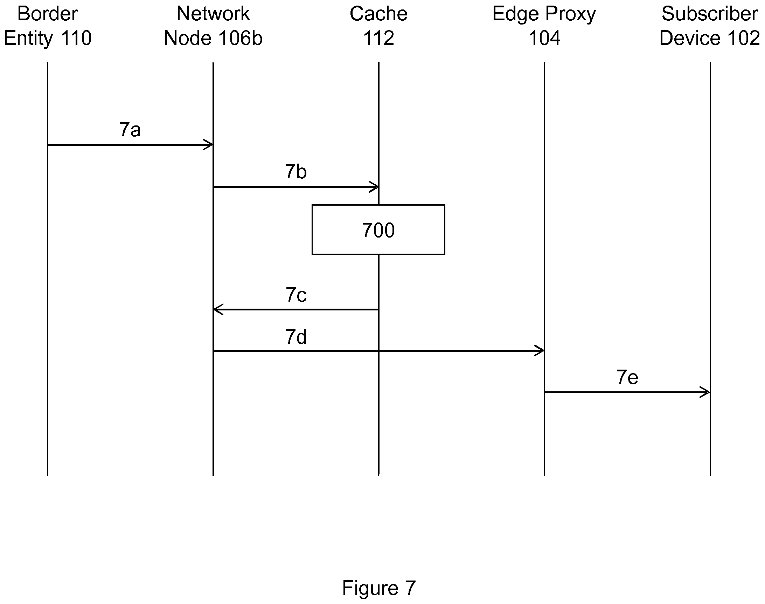

Figure 7 illustrates an example subscriber configuration data retrieval procedure according to embodiments. In the embodiment shown in Figure 7, the subscriber configuration data retrieval procedure is carried out as part of a communication session setup procedure from a remote subscriber device (not shown) outside telecommunications network 400 to subscriber device 102. A dialog request message relating to subscriber device 102 is received from outside telecommunications network 400 at border entity 110. Border entity 110 allocates the dialog request message request to one of the plurality of network nodes 106, in this case network node 106b. In some embodiments, the choice of network node is made randomly by border entity 110. In further embodiments, the choice of network node is made according to one or more load balancing criteria in order to distribute network load across the plurality of network nodes in the cluster 106. In embodiments, the one or more load balancing criteria enable handling of the dialog request message by any of the plurality of network nodes in the cluster 106. As a result, the dialog request message is forwarded to the allocated network node 106b as dialog request message 7a. In alternative embodiments (not shown), the incoming dialog request message may originate from a further subscriber device within telecommunications network 400, in which case, the dialog request message is allocated and forwarded to a network node in the cluster of network nodes 106 by whichever edge proxy is associated with the further subscriber device.

Having received dialog request message 7a, network node 106b inspects the received dialog request to determine which subscriber the dialog request relates to (in this case the subscriber of subscriber device 102). Network node 106b then performs a filtering procedure to determine and/or apply one or more initial filter criteria to the dialog request. In order to complete the filtering procedure, network node 106b requires subscriber configuration data for subscriber device 102. Network node 106b transmits a subscriber configuration data retrieval request 7b to cache 112 in relation to subscriber device 102, on the basis of information received in dialog request message 7a.

In response to receipt of subscriber configuration data retrieval request 7b, cache 112 determines whether the shared cache store contains subscriber configuration data for subscriber device 102 at step 700. In the embodiments depicted in Figure 7, cache 112 determines that shared cache store 114 does contain subscriber configuration data for subscriber device 102, for example as a result of a recent registration procedure carried out in relation to subscriber device 102. In embodiments, the registration procedure was performed by a network node in cluster 106 other than network node 106b. In response to determining that shared cache store 114 does contain subscriber configuration data for subscriber device 102 at step 700, cache 112 retrieves subscriber configuration data for subscriber device 102 from shared cache store 114 and transmits the retrieved configuration data to network node 106b in subscriber configuration data retrieval response 7c.

In embodiments, the subscriber configuration data for subscriber device 102 comprises initial filter criteria for subscriber device 102. Having received the initial filter criteria for subscriber device 102, network node 106b can complete the filtering procedure for the dialog request by applying any necessary filters and/or invoking any required application servers etc. as described above. Having completed the filtering procedure for subscriber device 102, processing of the communication session setup can be continued, by retrieving registration data for subscriber device 102 (for example as described previously in relation to Figure 3). Having retrieved registration data for subscriber device 102, network node 106b transmits dialog request message 7d to the appropriate edge proxy (for example as identified in the retrieved registration data), in this case edge proxy 104. Edge proxy 104 continues the communication session setup procedure by forwarding the dialog request message to subscriber device 102 as dialog request message 7e.

Again, as the required subscriber configuration data for subscriber device 102 is contained in shared cache store 114, a query to subscriber configuration network node 116 has been avoided. Whilst in the embodiments described in relation to Figure 7, the required subscriber configuration data for subscriber device 102 was contained in shared cache store 114, in alternative embodiments, the required subscriber configuration data for subscriber device 102 is not contained in shared cache store 114, in which case it can be retrieved from subscriber configuration network node 116 as described previously in relation to Figures 5 and 6.

In embodiments, shared cache store 114 comprises a clustered cache store, wherein the subscriber configuration data comprised in shared cache store 114 is distributed among a number of nodes in telecommunications network 400. In embodiments, the subscriber configuration data stored in shared cache store 114 is distributed among the cluster of network nodes 106. In such embodiments, a portion of the subscriber configuration data stored in shared cache store 114 is stored in memory at two or more or each network node in the cluster of network nodes 106. In embodiments, a first portion of the registration data stored in memory at network node 106a, and a second, different portion of the registration data is stored in memory at network node 106b.

Hence, during processing at a given network node in the cluster of network nodes 106, any subscriber configuration data that may be required may be stored either locally at the given network node or remotely on a different network node in the cluster 106. Hence the aforementioned write, request and/or response messages sent to and received from shared cache store 114 may be sent and received within the given network node, or transmitted externally from the given network node to another node in the cluster, depending on the location of the required registration data. In embodiments, the shared registration data store comprises a key-value data store, for example Apache Casandra™.

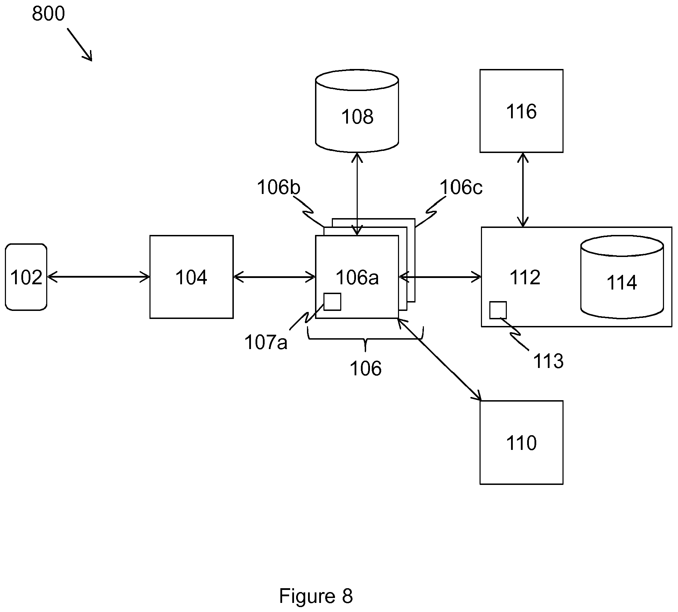

Figure 8 illustrates an example telecommunications network 800 in which embodiments of the present disclosure may be practiced. Telecommunications network 800 comprises subscriber device 102, edge proxy node 104, cluster of network nodes 106 (comprising network nodes 106a, 106b and 106c), shared registration data store 108 and border entity 110, whose functions are analogous to the corresponding entities as previously described in relation to Figure 1, as well as cache 112, shared cache store 114 and subscriber configuration network node 116, whose functions are analogous to the corresponding entities as previously described in relation to Figure 4. In embodiments, each network node in the plurality of network nodes 106 comprises a processor or processing system, as depicted by processor 107a comprised within network node 106a. In further embodiments, cache 112 comprises processor or processing system 113. Each network node and/or cache as described in relation to any of the embodiments described above may similarly comprise a processor and/or processing system.

One or more of the aspects of the embodiments described herein with reference to the drawings comprise processes performed by one or more network nodes 106 and/or cache 112. In embodiments, the one or more network nodes 106 and/or cache 112 comprise one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device; etc.

The distributed nodes discussed in the above embodiments, such as clustered network nodes 100, the distributed shared registration data store and/or the distributed shared cache store may be distributed across a number of systems, either real physical systems or virtual machines, such as those comprised within a virtualized data centre or public or private cloud. In this way the system can scale horizontally to support a large number of users. In embodiments, each network node in cluster 106 may each provide both SIP registrar and SIP routing proxy functions. In alternative embodiments, separate subsets of nodes may be provided for each of these functions, wherein both subsets are configured to access the shared registration data store. Cache 112 may similarly comprise a real physical system, a virtual machine such as those comprised within a virtualized data centre or public or private cloud, or a computerised function or service component comprised within another node in the telecommunications network. Memory, as referred to in the context of shared registration data store 104 and/or the shared cache store 114 may comprise any suitable storage medium, including solid-state drives (SSD) or other semiconductor-based RAM; a ROM, for example a CD ROM or a semiconductor ROM; or a magnetic recording medium, for example a floppy disk or hard disk.

The above embodiments are to be understood as illustrative examples of the invention. Further embodiments of the invention are envisaged. For example, whilst the above embodiments have been described in the context of an IMS network, the present disclosure may be similarly applied to other telecommunications networks, in particular those utilising the Internet Protocol (IP). It is to be understood that equivalents and modifications not described above may also be employed without departing from the scope of the invention, which is defined in the accompanying claims.

## Claims

1. A method of processing data in a telecommunications network, the network comprising:
a cluster of network nodes (106) responsible for conducting registration procedures for subscriber devices and/or processing routing data relating to communication sessions conducted in the network; and
a shared registration data store (108) comprising registration data for a plurality of subscriber devices, the shared registration data store being accessible by each of the network nodes of the cluster of network nodes, the method comprising, at a first network node (106b) of the cluster of network nodes:
receiving a communication session setup request (3a) requesting the setup of a communication session with a subscriber device in the plurality of subscriber devices;
retrieving (3b, 3c) registration data relating to the subscriber device from the shared registration data store; and
routing (3d) the communication session setup request according to the retrieved registration data, the retrieved registration data relating to the subscriber device having been previously stored (2c) in the shared registration data store by a second network node (106a) of the cluster of network nodes in relation to a registration procedure conducted for the subscriber device by the second network node, the second network node being a different network node than the first network node in the cluster of network nodes, **characterised in that**:
the registration data relating to the subscriber device is retrieved from the shared registration data store by the said first network node which is different from the second network node in the cluster of network nodes in response to receipt of the communication session setup request at the said first network node.

2. A method according to claim 1, comprising, at least in response to the routing of the communication session setup request by the first network node, updating the registration data relating to the subscriber device stored in the shared registration data store.

3. A method according to claim 2, comprising, in response to the routing of the communication session setup request by the first network node, receiving a request rejection message indicating that the retrieved registration data relating to the subscriber device is out of date, wherein the updating of the registration store is performed in response to receipt of the request rejection message.

4. A method according to any of claims 1 to 3, wherein the shared registration data store comprises a clustered registration data store wherein at least a first portion of the registration data in the clustered registration data store is stored in memory of a given node in the cluster of network nodes and at least a second, different portion of the registration data in the clustered registration data store is stored in memory of a different, given node in the cluster of network nodes.

5. A method according to claim 4, wherein registration data for the subscriber device in the clustered data store is stored in memory of the first network node, in memory of the second network node or in memory of a different network node to the first and second network nodes in the cluster of network nodes.

6. A method according to any preceding claim, wherein the communication session setup request is received at the first network node at least on the basis of one or more load balancing criteria applied in the network to balance the processing load between network nodes in the cluster of network nodes.

7. A method according to claim 6, wherein the one or more load balancing criteria for the communication session setup request are applied by an edge proxy network node and the communication session setup request is received at the first network node from the edge proxy network node.

8. A method according to claim 6 or 7, wherein the one or more load balancing criteria allow any communication session setup request or registration request to be handled by any node in the cluster of nodes.

9. A method according to any preceding claim, wherein the second network node conducted an authentication procedure in relation to the subscriber device before storing registration data for the subscriber device in the shared registration data store.

10. A method according to claim 9, wherein performing the authentication procedure comprised the second network node contacting a subscriber configuration network node responsible for authenticating subscriber devices in the network.

11. A method according to claim 10, wherein the network comprises an Internet Protocol Multimedia Subsystem, IMS, network and the subscriber configuration network node comprises a Home Subscriber Server, HSS.

12. A method according to any preceding claim, comprising receiving a further registration request requesting re-registration of the subscriber device with the network; and
in response to receipt of the further registration request, conducting a re-registration procedure for the subscriber device,
wherein conducting the re-registration procedure for the subscriber device comprises updating registration data for the subscriber device in the shared registration data store.

13. A method according to claim 12, comprising, in response to updating of the registration data for the subscriber device in the shared registration data store, transmitting a registration response to the subscriber device confirming re-registration of the subscriber device with the network.

14. A method according to claim 12 or 13, wherein conducting the re-registration procedure for the subscriber device does not comprise conducting an authentication procedure in relation to the subscriber device.

15. A method according to any of claims 12 to 14, comprising receiving, at periodic intervals, a plurality of further re-registration requests requesting re-registration of the subscriber device with the network; and
in response to receipt of the plurality of further re-registration requests at periodic intervals, updating registration data for the subscriber device in the shared registration data store.

16. A method according to any of claims 12 to 15, wherein one or more of the further registration request and the further re-registration requests comprise Session Initiation Protocol, SIP, REGISTER messages.

17. A method according to any preceding claim, wherein the registration data stored in the shared registration data store for the subscriber device comprises a binding between an identifier for a subscriber of the subscriber device and a network address for the subscriber device.

18. A method according to claims 12 and 17, wherein the further registration request comprises the subscriber identifier and the network address for the subscriber device.

19. A method according to claim 17 or 18, wherein the network address comprises one or more of an Internet Protocol, IP, address associated with the subscriber device and a port associated with the subscriber device.

20. A method according to any preceding claim, wherein the registration data stored in the shared registration data store for the subscriber device comprises information for reaching the subscriber device in the network.

21. A method according to any preceding claim, wherein one or more of the nodes in the cluster of network nodes comprise Session Initiation Protocol, SIP, router, service, proxy and/or registrar nodes.

22. A method according to any preceding claim, wherein the communication session setup request comprises one or more of: a Session Initiation Protocol, SIP, INVITE message, a SIP MESSAGE message, a SIP SUBSCRIBE message and a SIP PUBLISH message.

23. Apparatus for processing data in a telecommunications network, the apparatus comprising a first network node (106b) in a cluster of network nodes (106) which are responsible for conducting registration procedures for a plurality of subscriber devices and/or processing routing data relating to communication sessions conducted in the network, the apparatus comprising:
means for receiving a communication session setup request (3a) requesting the setup of a communication session with a subscriber device of the plurality of subscriber devices;
means for retrieving (3b, 3c) registration data relating to the subscriber device from a shared registration data store (108), wherein the shared registration data store comprises registration data for the plurality of subscriber devices and is accessible by each of the network nodes in the cluster of network nodes; and
means for routing (3d) the communication session setup request according to the retrieved registration data, the retrieved registration data relating to the subscriber device having been previously stored (2c) in the shared registration data store by a second network node (106a) of the cluster of network nodes in relation to a registration procedure conducted for the subscriber device by the second network node, the second network node being a different network node than the first network node in the cluster of network nodes, **characterised in that**:
the registration data relating to the subscriber device is retrieved from the shared registration data store by the said first network node which is different from the second network node in the cluster of network nodes in response to receipt of the communication session setup request at the said first network node.

24. A computer program product comprising a set of instructions, which, when executed by a computerised device is configured to cause the computerised device to perform a method of processing data in a telecommunications network, the network comprising:
a cluster of network nodes (106) responsible for conducting registration procedures for subscriber devices and/or processing routing data relating to communication sessions conducted in the network; and
a shared registration data store (108) comprising registration data for a plurality of subscriber devices, the shared registration data store being accessible by each of the network nodes in the cluster of network nodes, the method comprising:
at a first network node (106b) of the cluster of network nodes, receiving a communication session setup request (3a) requesting the setup of a communication session with a subscriber device of the plurality of subscriber devices;
retrieving (3b, 3c) registration data relating to the subscriber device from the shared registration data store; and
routing (3d) the communication session setup request according to the retrieved registration data, the retrieved registration data relating to the subscriber device having been previously stored (2c) in the shared registration data store by a second network node (106a) of the cluster of network nodes in relation to a registration procedure conducted for the subscriber device by the second network node, the second network node being a different network node to the first network node in the cluster of network nodes, **characterised in that**:
the registration data relating to the subscriber device is retrieved from the shared registration data store by the said first network node which is different from the second network node in the cluster of network nodes in response to receipt of the communication session setup request at the said first network node.

25. A system for processing data in a telecommunications network, the system comprising:
a first network node (106b) and a second network node (106a) belonging to a cluster of network nodes (106) which is responsible for conducting registration procedures for subscriber devices and/or processing routing data relating to communication sessions conducted in the network, and a shared registration data store (108), the first network node (106b) comprising:
means for receiving a communication session setup request requesting the setup of a communication session with a subscriber device of a plurality of subscriber devices; and
means for retrieving, in response to the receipt of the communication session setup request, registration data relating to the subscriber device from the shared registration data store, wherein the shared registration data store comprises registration data for a plurality of subscriber devices and is accessible by each of the network nodes in the cluster of network nodes;
and
the second network node (106a), which is different than the first network node (106b), comprising:
means for storing the registration data for the said subscriber device in the said shared registration data store (108).

## Patentansprüche

1. Verfahren zum Verarbeiten von Daten in einem Telekommunikationsnetzwerk, wobei das Netzwerk umfasst:
ein Cluster von Netzwerkknoten (106), das verantwortlich ist für das Durchführen von Registrierungsprozeduren für Teilnehmergeräte und/oder das Verarbeiten von Routing-Daten, die sich auf Kommunikationssitzungen beziehen, die in dem Netzwerk durchgeführt werden; und
einen geteilten Registrierungsdatenspeicher (108), der Registrierungsdaten für eine Mehrzahl von Teilnehmergeräten umfasst, wobei auf den geteilten Registrierungsdatenspeicher durch jeden der Netzwerkknoten des Clusters von Netzwerkknoten zugegriffen werden kann, wobei das Verfahren umfasst, an einem ersten Netzwerkknoten (106b) des Clusters von Netzwerkknoten:
Empfangen einer Kommunikationssitzungsaufbauanforderung (3a), die den Aufbau einer Kommunikationssitzung mit einem Teilnehmergerät in der Mehrzahl von Teilnehmergeräten anfordert;
Abrufen (3b, 3c) von Registrierungsdaten, die sich auf das Teilnehmergerät beziehen, von dem geteilten Registrierungsdatenspeicher; und
Routing (3d) der Kommunikationssitzungsaufbauanforderung entsprechend den abgerufenen Registrierungsdaten, wobei die abgerufenen Registrierungsdaten, die sich auf das Teilnehmergerät beziehen, zuvor durch einen zweiten Netzwerkknoten (106a) des Clusters von Netzwerkknoten in den geteilten Registrierungsdatenspeicher gespeichert wurden (2c) in Bezug auf eine Registrierungsprozedur, die durch den zweiten Netzwerkknoten für das Teilnehmergerät durchgeführt wurde, wobei der zweite Netzwerkknoten ein anderer Netzwerkknoten ist als der erste Netzwerkknoten in dem Cluster von Netzwerkknoten, **dadurch gekennzeichnet, dass**:
die Registrierungsdaten, die sich auf das Teilnehmergerät beziehen, durch den ersten Netzwerkknoten, der von dem zweiten Netzwerkknoten in dem Cluster von Netzwerkknoten verschieden ist, von dem geteilten Registrierungsdatenspeicher abgerufen werden, in Antwort auf den Empfang der Kommunikationssitzungsaufbauanforderung an dem ersten Netzwerkknoten.

2. Verfahren nach Anspruch 1, umfassend, zumindest in Antwort auf das Routing der Kommunikationssitzungsaufbauanforderung durch den ersten Netzwerkknoten, ein Aktualisieren der in dem geteilten Registrierungsdatenspeicher gespeicherten Registrierungsdaten, die sich auf das Teilnehmergerät beziehen.

3. Verfahren nach Anspruch 2, umfassend, in Antwort auf das Routing der Kommunikationssitzungsaufbauanforderung durch den ersten Netzwerkknoten, ein Empfangen einer Anforderungsablehnungsnachricht, die anzeigt, dass die abgerufenen Registrierungsdaten, die sich auf das Teilnehmergerät beziehen, nicht mehr aktuell sind, wobei das Aktualisieren des Registrierungsdatenspeichers in Antwort auf den Empfang der Anforderungsablehnungsnachricht ausgeführt wird.

4. Verfahren nach einem der Ansprüche 1 bis 3, wobei der geteilte Registrierungsdatenspeicher einen geclusterten Registrierungsdatenspeicher umfasst, wobei zumindest ein erster Teil der Registrierungsdaten in dem geclusterten Registrierungsdatenspeicher in einem Speicher eines gegebenen Knotens in dem Cluster von Netzwerkknoten gespeichert ist, und zumindest ein zweiter, anderer Teil der Registrierungsdaten in dem geclusterten Registrierungsdatenspeicher in einem Speicher eines anderen gegebenen Knoten, in dem Cluster von Netzwerkknoten gespeichert ist.

5. Verfahren nach Anspruch 4, wobei Registrierungsdaten für das Teilnehmergerät in dem geclusterten Datenspeicher im Speicher des ersten Netzwerkknotens, im Speicher des zweiten Netzwerkknotens, oder im Speicher eines anderen Netzwerkknotens als des ersten und zweiten Netzwerkknotens in dem Cluster von Netzwerkknoten gespeichert sind.

6. Verfahren nach einem der vorangegangenen Ansprüche, wobei die Kommunikationssitzungsaufbauanforderung an dem ersten Netzwerkknoten zumindest auf Basis von ein oder mehreren Lastverteilungskriterien empfangen wird, die in dem Netzwerk angewendet werden, um die Verarbeitungslast zwischen Netzwerkknoten in dem Cluster von Netzwerkknoten zu verteilen.

7. Verfahren nach Anspruch 6, wobei die ein oder mehreren Lastverteilungskriterien für die Kommunikationssitzungsaufbauanforderung von einem Kantenproxynetz-werkknoten angewendet werden, und die Kommunikationssitzungsaufbauanforderung an dem ersten Netzwerkknoten von dem Kantenproxynetzwerkknoten empfangen wird.

8. Verfahren nach Anspruch 6 oder 7, wobei die ein oder mehreren Lastverteilungskriterien es ermöglichen, dass jede Kommunikationssitzungsaufbauanforderung oder Registrierungsanforderung von jedem Knoten in dem Cluster von Knoten bearbeitet werden kann.

9. Verfahren nach einem der vorangegangenen Ansprüche, wobei der zweite Netzwerkknoten vor dem Speichern der Registrierungsdaten für das Teilnehmergerät in dem geteilten Registrierungsdatenspeicher eine Authentifizierungsprozedur in Bezug auf das Teilnehmergerät ausgeführt hat.

10. Verfahren nach Anspruch 9, wobei das Ausführen der Authentifizierungsprozedur umfasst hat, dass der zweite Netzwerkknoten einen Teilnehmerkonfigurationsnetzwerkknoten kontaktiert hat, der verantwortlich ist für die Authentifizierung von Teilnehmergeräten in dem Netzwerk.

11. Verfahren nach Anspruch 10, wobei das Netzwerk ein Internet-Protokoll-Multimedia-System-, IMS, -Netzwerk umfasst, und der Teilnehmerkonfigurationsnetzwerkknoten einen Home-Teilnehmer-Server, HSS, umfasst.

12. Verfahren nach einem der vorangegangenen Ansprüche, umfassend ein Empfangen einer weiteren Registrierungsanforderung, die eine Neuregistrierung des Teilnehmergeräts mit dem Netzwerk anfordert; und
in Antwort auf den Empfang der weiteren Registrierungsanforderung, Durchführen einer Neuregistrierungsprozedur für das Teilnehmergerät,
wobei das Durchführen der Neuregistrierungsprozedur für das Teilnehmergerät ein Aktualisieren von Registrierungsdaten für das Teilnehmergerät in dem geteilten Registrierungsdatenspeicher umfasst.

13. Verfahren nach Anspruch 12, umfassend, in Antwort auf das Aktualisieren der Registrierungsdaten für das Teilnehmergerät in dem geteilten Registrierungsdatenspeicher, Übertragen einer Registrierungsantwort an das Teilnehmergerät, welche die Neuregistrierung des Teilnehmergeräts mit dem Netzwerk bestätigt.

14. Verfahren nach Anspruch 12 oder 13, wobei das Durchführen der Neuregistrierungsprozedur für das Teilnehmergerät kein Durchführen einer Authentifizierungsprozedur in Bezug auf das Teilnehmergerät umfasst.

15. Verfahren nach einem der Ansprüche 12 bis 14, umfassend ein Empfangen, in periodischen Intervallen, einer Mehrzahl von weiteren Neuregistrierungsanforderungen, die eine Neuregistrierung des Teilnehmergeräts mit dem Netzwerk anfordern; und
in Antwort auf den Empfang der Mehrzahl von weiteren Neuregistrierungsanforderungen in periodischen Intervallen, Aktualisieren der Registrierungsdaten für das Teilnehmergerät in dem geteilten Registrierungsdatenspeicher.

16. Verfahren nach einem der Ansprüche 12 bis 15, wobei ein oder mehrere der weiteren Registrierungsanforderung und der weiteren Neuregistrierungsanforderung Sitzung-Initiierung-Protokoll-, SIP, -REGISTER-Nachrichten umfassen.

17. Verfahren nach einem der vorangegangenen Ansprüche, wobei die Registrierungsdaten, die in dem geteilten Registrierungsdatenspeicher für das Teilnehmergerät gespeichert sind, eine Bindung zwischen einem Identifizierer für einen Teilnehmer des Teilnehmergeräts und einer Netzwerkadresse des Teilnehmergeräts umfassen.

18. Verfahren nach den Ansprüchen 12 und 17, wobei die weitere Registrierungsanforderung den Teilnehmeridentifizierer und die Netzwerkadresse für das Teilnehmergerät umfasst.

19. Verfahren nach Anspruch 17 oder 18, wobei die Netzwerkadresse eines oder mehrere einer Internet-Protokoll-, IP, -Adresse, die mit dem Teilnehmergerät assoziiert ist, und einem Port, der mit dem Teilnehmergerät assoziiert ist, umfasst.

20. Verfahren nach einem der vorangegangenen Ansprüche, wobei die Registrierungsdaten, die in dem geteilten Registrierungsdatenspeicher für das Teilnehmergerät gespeichert sind, eine Information zum Erreichen des Teilnehmergeräts in dem Netzwerk umfassen.

21. Verfahren nach einem der vorangegangenen Ansprüche, wobei ein oder mehrere der Knoten in dem Cluster von Netzwerkknoten Sitzung-Initiierung-Protokoll-, SIP, -Router-, -Dienst-, -Proxy- und/oder-Registerknoten umfassen.

22. Verfahren nach einem der vorangegangenen Ansprüche, wobei die Kommunikationssitzungsaufbauanforderung ein oder mehrere einer Sitzung-Initiierung-Protokoll-, SIP, -INVITE-Nachricht, einer SIP-MESSAGE-Nachricht, einer SIP-SUBSCRIBE-Nachricht und einer SIP-PUBLISH-Nachricht umfasst.

23. Vorrichtung zum Verarbeiten von Daten am Telekommunikationsnetzwerk, wobei die Vorrichtung einen ersten Netzwerkknoten (106b) in einem Cluster von Netzwerkknoten (106) umfasst, welche verantwortlich sind für das Durchführen von Registrierungsprozeduren für eine Mehrzahl von Teilnehmergeräten und/oder zum Verarbeiten von Routing-Daten, die sich auf Kommunikationssitzungen beziehen, die in dem Netzwerk durchgeführt werden, wobei die Vorrichtung umfasst:
Mittel zum Empfangen einer Kommunikationssitzungsaufbauanforderung (3a), die den Aufbau einer Kommunikationssitzung mit einem Teilnehmergerät der Mehrzahl von Teilnehmergeräten anfordert;
Mittel zum Abrufen (3b, 3c) von Registrierungsdaten, die sich auf das Teilnehmergerät beziehen, von einem geteilten Registrierungsdatenspeicher (108), wobei der geteilte Registrierungsdatenspeicher Registrierungsdaten für die Mehrzahl von Teilnehmergeräten umfasst, und auf ihn durch jeden der Netzwerkknoten in dem Cluster von Netzwerkknoten zugegriffen werden kann; und
Mittel zum Routing (3d) der Kommunikationssitzungsaufbauanforderung entsprechend der abgerufenen Registrierungsdaten, wobei die abgerufenen Registrierungsdaten, die sich auf das Teilnehmergerät beziehen, zuvor durch einen zweiten Netzwerkknoten (106a) des Clusters von Netzwerkknoten in den geteilten Registrierungsdatenspeicher gespeichert wurden (2c) in Bezug auf eine Registrierungsprozedur, die durch den zweiten Netzwerkknoten für das Teilnehmergerät durchgeführt wurde, wobei der zweite Netzwerkknoten ein anderer Netzwerkknoten ist als der erste Netzwerkknoten in dem Cluster von Netzwerkknoten, **dadurch gekennzeichnet, dass**:
die Registrierungsdaten, die sich auf das Teilnehmergerät beziehen, durch den ersten Netzwerkknoten, der von dem zweiten Netzwerkknoten in dem Cluster von Netzwerkknoten verschieden ist, von dem geteilten Registrierungsdatenspeicher abgerufen werden, in Antwort auf den Empfang der Kommunikationssitzungsaufbauanforderung an dem ersten Netzwerkknoten.

24. Computerprogrammprodukt, umfassend einen Satz von Instruktionen, welche, wenn sie von einem Computergerät ausgeführt werden, ausgestaltet sind zu bewirken, dass das Computergerät ein Verfahren zum Verarbeiten von Daten in einem Telekommunikations-netzwerk durchführt, wobei das Netzwerk umfasst:
ein Cluster von Netzwerkknoten (106), das verantwortlich ist für das Durchführen von Registrierungsprozeduren für Teilnehmergeräte und/oder das Verarbeiten von Routing-Daten, die sich auf Kommunikationssitzungen beziehen, die in dem Netzwerk durchgeführt werden; und
einen geteilten Registrierungsdatenspeicher (108), der Registrierungsdaten für eine Mehrzahl von Teilnehmergeräten umfasst, wobei auf den geteilten Registrierungsdatenspeicher durch jeden der Netzwerkknoten des Clusters von Netzwerkknoten zugegriffen werden kann, wobei das Verfahren umfasst:
an einem ersten Netzwerkknoten (106b) des Clusters von Netzwerkknoten, Empfangen einer Kommunikationssitzungsaufbauanforderung (3a), die den Aufbau einer Kommunikationssitzung mit einem Teilnehmergerät in der Mehrzahl von Teilnehmergeräten anfordert;
Abrufen (3b, 3c) von Registrierungsdaten, die sich auf das Teilnehmergerät beziehen, von dem geteilten Registrierungsdatenspeicher; und
Routing (3d) der Kommunikationssitzungsaufbauanforderung entsprechend den abgerufenen Registrierungsdaten, wobei die abgerufenen Registrierungsdaten, die sich auf das Teilnehmergerät beziehen, zuvor durch einen zweiten Netzwerkknoten (106a) des Clusters von Netzwerkknoten in den geteilten Registrierungsdatenspeicher gespeichert wurden (2c) in Bezug auf eine Registrierungsprozedur, die durch den zweiten Netzwerkknoten für das Teilnehmergerät durchgeführt wurde, wobei der zweite Netzwerkknoten ein anderer Netzwerkknoten ist als der erste Netzwerkknoten in dem Cluster von Netzwerkknoten, **dadurch gekennzeichnet, dass**:
die Registrierungsdaten, die sich auf das Teilnehmergerät beziehen, durch den ersten Netzwerkknoten, der von dem zweiten Netzwerkknoten in dem Cluster von Netzwerkknoten verschieden ist, von dem geteilten Registrierungsdatenspeicher abgerufen werden, in Antwort auf den Empfang der Kommunikationssitzungsaufbauanforderung an dem ersten Netzwerkknoten.

25. System zum Verarbeiten von Daten in einem Telekommunikationsnetzwerk, wobei das System umfasst:
einen ersten Netzwerkknoten (106b) und einen zweiten Netzwerkknoten (106a), die zu einem Cluster von Netzwerkknoten (106) gehören, das verantwortlich ist für das Durchführen von Registrierungsprozeduren für Teilnehmergeräte und/oder das Verarbeiten von Routing-Daten, die sich auf Kommunikationssitzungen beziehen, die in dem Netzwerk durchgeführt werden, und einen geteilten Registrierungsdatenspeicher (108), wobei der erste Netzwerkknoten (106b) umfasst:
Mittel zum Empfangen einer Kommunikationssitzungsaufbauanforderung, die den Aufbau einer Kommunikationssitzung mit einem Teilnehmergerät einer Mehrzahl von Teilnehmergeräten anfordert; und
Mittel zum Abrufen, in Antwort auf den Empfang der Kommunikationssitzungsaufbauanforderung, von Registrierungsdaten, die sich auf das Teilnehmergerät beziehen, von dem geteilten Registrierungsdatenspeicher, wobei der geteilte Registrierungsdatenspeicher Registrierungsdaten für eine Mehrzahl von Teilnehmer-geräten umfasst, und auf ihn durch jeden der Netzwerkknoten in dem Cluster von Netzwerkknoten zugegriffen werden kann; und
wobei der zweite Netzwerkknoten, von dem ersten Netzwerkknoten (106b) verschieden ist, umfasst:
Mittel zum Speichern der Registrierungsdaten für das Teilnehmergerät in dem geteilten Registrierungsdatenspeicher (108).

## Revendications

1. Procédé de traitement de données dans un réseau de télécommunications, le réseau comprenant :
une grappe de noeuds de réseau (106) chargée de réaliser des procédures d'enregistrement pour des dispositifs d'abonné et/ou de traiter des données de routage relatives à des sessions de communication réalisées dans le réseau ; et
une mémoire de données d'enregistrement partagée (108) comprenant des données d'enregistrement pour une pluralité de dispositifs d'abonné, la mémoire de données d'enregistrement partagée étant accessible par chacun des noeuds de réseau de la grappe de noeuds de réseau, le procédé comprenant, au niveau d'un premier noeud de réseau (106b) de la grappe de noeuds de réseau :
la réception d'une demande d'établissement de session de communication (3a) demandant l'établissement d'une session de communication avec un dispositif d'abonné dans la pluralité de dispositifs d'abonné ;
la récupération (3b, 3c) de données d'enregistrement relatives au dispositif d'abonné à partir de la mémoire de données d'enregistrement partagée ; et
le routage (3d) de la demande d'établissement de session de communication en fonction des données d'enregistrement récupérées, les données d'enregistrement récupérées relatives au dispositif d'abonné ayant été stockées précédemment (2c) dans la mémoire de données d'enregistrement partagée par un second noeud de réseau (106a) de la grappe de noeuds de réseau par rapport à une procédure d'enregistrement réalisée pour le dispositif d'abonné par le second noeud de réseau, le second noeud de réseau étant un noeud de réseau différent du premier noeud de réseau dans la grappe de noeuds de réseau, **caractérisé en ce que** :
les données d'enregistrement relatives au dispositif d'abonné sont récupérées à partir de la mémoire de données d'enregistrement partagée par ledit premier noeud de réseau qui est différent du second noeud de réseau dans la grappe de noeuds de réseau en réponse à la réception de la demande d'établissement de session de communication au niveau dudit premier noeud de réseau.

2. Procédé selon la revendication 1, comprenant, au moins en réponse au routage de la demande d'établissement de session de communication par le premier noeud de réseau, la mise à jour des données d'enregistrement relatives au dispositif d'abonné stockées dans la mémoire de données d'enregistrement partagée.

3. Procédé selon la revendication 2, comprenant, en réponse au routage de la demande d'établissement de session de communication par le premier noeud de réseau, la réception d'un message de rejet de demande indiquant que les données d'enregistrement récupérées relatives au dispositif d'abonné sont obsolètes, dans lequel la mise à jour de la mémoire d'enregistrement est effectuée en réponse à la réception du message de rejet de demande.

4. Procédé selon l'une quelconque des revendications 1 à 3, dans lequel la mémoire de données d'enregistrement partagée comprend une mémoire de données d'enregistrement en grappe où au moins une première partie des données d'enregistrement dans la mémoire de données d'enregistrement en grappe est stockée dans une mémoire d'un noeud donné dans la grappe de noeuds de réseau et au moins une seconde partie différente des données d'enregistrement dans la mémoire de données d'enregistrement en grappe est stockée dans une mémoire d'un noeud donné différent dans la grappe de noeuds de réseau.

5. Procédé selon la revendication 4, dans lequel des données d'enregistrement pour le dispositif d'abonné dans la mémoire de données en grappe sont stockées dans une mémoire du premier noeud de réseau, dans une mémoire du second noeud de réseau ou dans une mémoire d'un noeud de réseau différent des premier et second noeuds de réseau dans la grappe de noeuds de réseau.

6. Procédé selon l'une quelconque des revendications précédentes, dans lequel la demande d'établissement de session de communication est reçue au niveau du premier noeud de réseau au moins sur la base d'un ou plusieurs critères d'équilibrage de charge appliqués dans le réseau pour équilibrer la charge de traitement entre des noeuds de réseau dans la grappe de noeuds de réseau.

7. Procédé selon la revendication 6, dans lequel les un ou plusieurs critères d'équilibrage de charge pour la demande d'établissement de session de communication sont appliqués par un noeud de réseau mandataire de périphérie et la demande d'établissement de session de communication est reçue au niveau du premier noeud de réseau en provenance du noeud de réseau mandataire de périphérie.

8. Procédé selon la revendication 6 ou 7, dans lequel les un ou plusieurs critères d'équilibrage de charge permettent que toute demande d'établissement de session de communication ou demande d'enregistrement soit prise en charge par un noeud quelconque dans la grappe de noeuds.

9. Procédé selon l'une quelconque des revendications précédentes, dans lequel le second noeud de réseau a réalisé une procédure d'authentification par rapport au dispositif d'abonné avant de stocker des données d'enregistrement pour le dispositif d'abonné dans la mémoire de données d'enregistrement partagée.

10. Procédé selon la revendication 9, dans lequel l'exécution de la procédure d'authentification a compris le fait que le second noeud de réseau a contacté un noeud de réseau de configuration d'abonné chargé d'authentifier des dispositifs d'abonné dans le réseau.

11. Procédé selon la revendication 10, dans lequel le réseau comprend un réseau de sous-système multimédia de protocole Internet, IMS, et le noeud de réseau de configuration d'abonné comprend un serveur d'abonné résidentiel, HSS.

12. Procédé selon l'une quelconque des revendications précédentes, comprenant la réception d'une demande d'enregistrement supplémentaire demandant le réenregistrement du dispositif d'abonné auprès du réseau ; et
en réponse à la réception de la demande d'enregistrement supplémentaire, la réalisation d'une procédure de réenregistrement pour le dispositif d'abonné,
dans lequel la réalisation de la procédure de réenregistrement pour le dispositif d'abonné comprend la mise à jour de données d'enregistrement pour le dispositif d'abonné dans la mémoire de données d'enregistrement partagée.

13. Procédé selon la revendication 12, comprenant, en réponse à la mise à jour des données d'enregistrement pour le dispositif d'abonné dans la mémoire de données d'enregistrement partagée, la transmission d'une réponse d'enregistrement au dispositif d'abonné confirmant le réenregistrement du dispositif d'abonné auprès du réseau.

14. Procédé selon la revendication 12 ou 13, dans lequel la réalisation de la procédure de réenregistrement pour le dispositif d'abonné ne comprend pas la réalisation d'une procédure d'authentification par rapport au dispositif d'abonné.

15. Procédé selon l'une quelconque des revendications 12 à 14, comprenant la réception, à des intervalles périodiques, d'une pluralité de demandes de réenregistrement supplémentaires demandant un réenregistrement du dispositif d'abonné auprès du réseau ; et
en réponse à la réception de la pluralité de demandes de réenregistrement supplémentaires à des intervalles périodiques, la mise à jour de données d'enregistrement pour le dispositif d'abonné dans la mémoire de données d'enregistrement partagée.

16. Procédé selon l'une quelconque des revendications 12 à 15, dans lequel une ou plusieurs de la demande d'enregistrement supplémentaire et des demandes de réenregistrement supplémentaires comprennent des messages de protocole d'initiation de session, SIP, REGISTER.

17. Procédé selon l'une quelconque des revendications précédentes, dans lequel les données d'enregistrement stockées dans la mémoire de données d'enregistrement partagée pour le dispositif d'abonné comprennent une liaison entre un identificateur pour un abonné du dispositif d'abonné et une adresse de réseau pour le dispositif d'abonné.

18. Procédé selon les revendications 12 et 17, dans lequel la demande d'enregistrement supplémentaire comprend l'identificateur d'abonné et l'adresse de réseau pour le dispositif d'abonné.

19. Procédé selon la revendication 17 ou 18, dans lequel l'adresse de réseau comprend un ou plusieurs d'une adresse de protocole Internet, IP, associée au dispositif d'abonné et d'un port associé au dispositif d'abonné.

20. Procédé selon l'une quelconque des revendications précédentes, dans lequel les données d'enregistrement stockées dans la mémoire de données d'enregistrement partagée pour le dispositif d'abonné comprennent des informations pour atteindre le dispositif d'abonné dans le réseau.

21. Procédé selon l'une quelconque des revendications précédentes, dans lequel un ou plusieurs des noeuds dans la grappe de noeuds de réseau comprennent des noeuds de routeur, de service, de mandataire et/ou de registraire de protocole d'initiation de session, SIP.

22. Procédé selon l'une quelconque des revendications précédentes, dans lequel la demande d'établissement de session de communication comprend un ou plusieurs parmi : un message de protocole d'initiation de session, SIP, INVITE, un message SIP MESSAGE, un message SIP SUBSCRIBE et un message SIP PUBLISH.

23. Appareil pour traiter des données dans un réseau de télécommunications, l'appareil comprenant un premier noeud de réseau (106b) dans une grappe de noeuds de réseau (106) qui est chargée de réaliser des procédures d'enregistrement pour une pluralité de dispositifs d'abonné et/ou de traiter des données de routage relatives à des sessions de communication réalisées dans le réseau, l'appareil comprenant :
des moyens pour recevoir une demande d'établissement de session de communication (3a) demandant l'établissement d'une session de communication avec un dispositif d'abonné de la pluralité de dispositifs d'abonné ;
des moyens pour récupérer (3b, 3c) des données d'enregistrement relatives au dispositif d'abonné à partir d'une mémoire de données d'enregistrement partagée (108), où la mémoire de données d'enregistrement partagée comprend des données d'enregistrement pour la pluralité de dispositifs d'abonné et est accessible par chacun des noeuds de réseau dans la grappe de noeuds de réseau ; et
des moyens pour router (3d) la demande d'établissement de session de communication en fonction des données d'enregistrement récupérées, les données d'enregistrement récupérées relatives au dispositif d'abonné ayant été stockées précédemment (2c) dans la mémoire de données d'enregistrement partagée par un second noeud de réseau (106a) de la grappe de noeuds de réseau par rapport à une procédure d'enregistrement réalisée pour le dispositif d'abonné par le second noeud de réseau, le second noeud de réseau étant un noeud de réseau différent du premier noeud de réseau dans la grappe de noeuds de réseau, **caractérisé en ce que** :
les données d'enregistrement relatives au dispositif d'abonné sont récupérées à partir de la mémoire de données d'enregistrement partagée par ledit premier noeud de réseau qui est différent du second noeud de réseau dans la grappe de noeuds de réseau en réponse à la réception de la demande d'établissement de session de communication au niveau dudit premier noeud de réseau.

24. Produit de programme informatique comprenant un jeu d'instructions, qui, lorsqu'il est exécuté par un dispositif informatisé, est configuré pour amener le dispositif informatisé à effectuer un procédé de traitement de données dans un réseau de télécommunications, le réseau comprenant :
une grappe de noeuds de réseau (106) chargée de réaliser des procédures d'enregistrement pour des dispositifs d'abonné et/ou de traiter des données de routage relatives à des sessions de communication réalisées dans le réseau ; et
une mémoire de données d'enregistrement partagée (108) comprenant des données d'enregistrement pour une pluralité de dispositifs d'abonné, la mémoire de données d'enregistrement partagée étant accessible par chacun des noeuds de réseau dans la grappe de noeuds de réseau, le procédé comprenant :
au niveau d'un premier noeud de réseau (106b) de la grappe de noeuds de réseau, la réception d'une demande d'établissement de session de communication (3a) demandant l'établissement d'une session de communication avec un dispositif d'abonné de la pluralité de dispositifs d'abonné ;
la récupération (3b, 3c) de données d'enregistrement relatives au dispositif d'abonné à partir de la mémoire de données d'enregistrement partagée ; et
le routage (3d) de la demande d'établissement de session de communication en fonction des données d'enregistrement récupérées, les données d'enregistrement récupérées relatives au dispositif d'abonné ayant été stockées précédemment (2c) dans la mémoire de données d'enregistrement partagée par un second noeud de réseau (106a) de la grappe de noeuds de réseau par rapport à une procédure d'enregistrement réalisée pour le dispositif d'abonné par le second noeud de réseau, le second noeud de réseau étant un noeud de réseau différent du premier noeud de réseau dans la grappe de noeuds de réseau, **caractérisé en ce que** :
les données d'enregistrement relatives au dispositif d'abonné sont récupérées à partir de la mémoire de données d'enregistrement partagée par ledit premier noeud de réseau qui est différent du second noeud de réseau dans la grappe de noeuds de réseau en réponse à la réception de la demande d'établissement de session de communication au niveau dudit premier noeud de réseau.

25. Système pour traiter des données dans un réseau de télécommunications, le système comprenant :
un premier noeud de réseau (106b) et un second noeud de réseau (106a) appartenant à une grappe de noeuds de réseau (106) qui est chargée de réaliser des procédures d'enregistrement pour des dispositifs d'abonné et/ou de traiter des données de routage relatives à des sessions de communication réalisées dans le réseau, et une mémoire de données d'enregistrement partagée (108), le premier noeud de réseau (106b) comprenant :
des moyens pour recevoir une demande d'établissement de session de communication demandant l'établissement d'une session de communication avec un dispositif d'abonné d'une pluralité de dispositifs d'abonné ; et
des moyens pour récupérer, en réponse à la réception de la demande d'établissement de session de communication, des données d'enregistrement relatives au dispositif d'abonné à partir de la mémoire de données d'enregistrement partagée, où la mémoire de données d'enregistrement partagée comprend des données d'enregistrement pour une pluralité de dispositifs d'abonné et est accessible par chacun des noeuds de réseau dans la grappe de noeuds de réseau ; et
le second noeud de réseau (106a), qui est différent du premier noeud de réseau (106b), comprenant :
des moyens pour stocker les données d'enregistrement pour ledit dispositif d'abonné dans ladite mémoire de données d'enregistrement partagée (108).
